Europäisches Patentamt

(19) European Patent Office

Office européen des brevets

(11) Publication number: **0 174 263**

**A2**

(12) **EUROPEAN PATENT APPLICATION**

(21) Application number: 85630141.1

(22) Date of filing: 03.09.85

(51) Int. Cl.⁴: **B 29 C 71/02**
//B29K67:00

(30) Priority: 07.09.84 US 648395

(43) Date of publication of application:
12.03.86 Bulletin 86/11

(84) Designated Contracting States:
DE GB IT

(71) Applicant: THE GOODYEAR TIRE & RUBBER COMPANY
1144 East Market Street
Akron, Ohio 44316(US)

(72) Inventor: Richeson, Donald Edward
9525 Kent Avenue
N.E. North Canton Ohio 44721(US)

(72) Inventor: Shriver, Clem Branum
40 Comet Road
Clinton Ohio 44216(US)

(72) Inventor: Perkins, William George
2213 21st Street
Cuyahoga Falls Ohio 44223(US)

(74) Representative: Weyland, Joseph Jean Pierre
Goodyear International Tire Technical Center Patent
Department Avenue Gordon Smith
L-7750 Colmar-Berg(LU)

(54) A process for producing a dimensionally stable polyester article.

㉗ Polyester articles are often heat set at an elevated temperature under a mechanical constraint which prevents their shrinkage during the heat setting process. Such a heat setting process provides the polyester article with improved dimensional stability. However, the heat set article will still shrink when exposed to high service temperatures even though the shrinkage is less than that which occurs in non-heat set articles.

The use of the process of this invention results in polyester articles with greatly improved dimensional stability. It entails heating an over-sized heat set polyester article in an unconstrained manner to a temperature which is greater than the expected service temperature of the article and no more than the heat setting temperature used for heat setting the over-sized article for a time sufficient to produce a dimensionally stable article of the desired size.

## A PROCESS FOR PRODUCING A DIMENSIONALLY
## STABLE POLYESTER ARTICLE

### Background of the Invention

Polyester articles are used in a wide variety of applications. They are made by utilizing numerous forming or shaping techniques, such as blow molding, thermoforming, mechanical forming, and the like. These polyester articles are often heat set at an elevated temperature to induce crystallization of the polyester in order to improve its dimensional stability. Heat set polyester articles, however, will still shrink when exposed to high service temperatures even though the shrinkage is less than that which occurs in non-heat set articles.

Unfortunately in many applications even small amounts of shrinkage cannot be tolerated. This problem has precluded the use of polyester articles in such applications. For example, nonrefillable beverage bottles are commonly made out of polyethylene terephthalate (PET), however, shrinkage upon sterilization has precluded the use of PET as a material from which refillable bottles can be made.

### Summary of the Invention

The use of the process of this invention results in polyester articles with greatly improved dimensional stability. It entails heating an over-sized heat set polyester article in an unconstrained manner to a temperature which is greater than the expected service temperature of the article and less than the heat setting temperature used for heat setting the over-sized article for a time sufficient to produce a dimensionally stable article of the desired size.

This process can be utilized in manufacturing a wide variety of polyester articles. It has been found to be particularly useful for making containers for foods and beverages, such as cans and bottles.

This invention more specifically reveals an improved process for producing a dimensionally stable polyester article comprising: (1) forming an over-sized article out of a polyester resin; (2) heat setting the over-sized article at an elevated heat setting temperature while holding the over-sized article under a mechanical constraint to prevent its shrinkage; and (3) heating the over-sized article in an unconstrained manner to a temperature which is greater than the expected service temperature of the article and no more than the heat setting temperature used to heat set the over-sized article while it was mechanically constrained, for a time sufficient to produce a dimensionally stable article of the desired size.

Detailed Description of the Invention

The polyester articles which are made in accordance with the process of this invention can be composed of virtually any type of thermoplastic polyester. These thermoplastic polyesters can be homopolymers or copolymers. Some representative examples of polyester resins which can be formed into the articles of this invention include polyethylene terephthalate (PET), polybutylene terephthalate (PBT), copolyesters derived by reacting terephthalic acid and isophthalic acid with cyclohexane dimethanol, and copolyesters derived by reacting terephthalic acid and isophthalic acid with ethylene glycol. Blends of various polyesters can also be used in the polyester articles of this invention. For example, the resin used to make the article can be a blend of PET and polyethylene isophthalate (PEI).

In the first step of the process of this invention a polyester resin is formed into an over-sized article using a conventional shaping technique, such as blow molding, thermoforming, or mechanical forming. This forming technique will provide the polyester with a certain degree of molecular orientation. Blow molding and thermoforming are both excellent techniques for forming the over-sized article.

The over-sized article made in the first step of this process will generally be from about 1% to about 15% larger than the desired size of the article. In many cases it will be preferred for the over-sized article to be from 4% to 8% larger than the article's desired size.

In the second step of the process of this invention the over-sized article is heat set to an elevated heat setting temperature. During this step the over-sized article is held under a mechanical constraint to prevent any shrinkage. The term mechanical constraint as used herein includes pneumatic and hydraulic constraint. Normally the over-sized article will be constrained by simply keeping it in the mold and under the constraint used in its formation throughout this step. Naturally, this invention is only applicable to articles which can be constrained during this step. Hollow articles, such as containers for foods and beverages, are perhaps the most common type of articles to which this invention pertains. Oriented films are another common type of article to which the process of this invention can be applied. Such oriented films are commonly formed by extrusion followed by stretching in one or more directions.

The temperature at which the over-sized article will be heat set while being held under the mechanical constraint will be above the glass transition temperature (Tg) and below the melting temperature (Tm) of the polyester resin used. Preferably the heat setting temperature will be in a range wherein the polyester resin crystallizes efficiently. Thus, in the case of PET the heat setting temperature will generally be from 120°C to 220°C. The heat setting temperature will also be above the expected service temperature of the polyester article. The term expected service temperature as used herein means the highest anticipated temperature to which the article will be exposed during its useful life. The optimum temperature and time required for this conventional heat setting step will vary from article to article and with the type of polyester used. However, persons skilled in the art will be able to ascertain the optimum conditions for carrying out this heat setting step to obtain desired crystallization.

In the third and final step in the process of this invention the over-sized article is heated in an unconstrained manner to a temperature which is greater than the expected service temperature of the polyester article and no more than the heat setting temperature used in the second step of this process. The over-sized article is heated for a time sufficient to produce a dimensionally stable article of the desired size. During this step the over-sized article will shrink by about 1 to 15%. The duration of this step will be for a time sufficient to fully shrink the over-sized article. The over-sized article formed in the first step in the process of this invention is designed to be the appropriate size for it to shrink to the desired size for the article in this unconstrained heating step.

The duration of the unconstrained heating step will vary with the temperature used, the type of polyester resin, the design of the article, and the heating source employed. As a general rule higher temperatures will reduce the heating time required to fully shrink the over-sized article. Simple convection heating can be used in the unconstrained heating step. However, if shorter heating times are desired then infrared heating can be utilized. Heating in a dielectric field can be utilized in the event that heating cycles of even shorter duration are desired.

The polyester articles which are made in accordance with the process of this invention have greatly improved dimensional stability. They will not shrink or distort structurally when exposed to elevated temperatures which are up to the temperature utilized in the unconstrained heating step. Articles made in accordance with this invention also have improved gas barrier properties. This additional benefit of reduced gas permeation is a very valuable property in many applications, such as in carbonated beverage bottles and packaging for oxygen sensitive products.

This invention is illustrated by the following examples which are merely for the purpose of illustration and are not to be regarded as limiting the scope of the invention or manner in which it can be practiced. Unless specifically indicated otherwise, all parts and percentages are given by weight.

## Example 1

A piece of PET film was cut from the sidewall of a 2-liter beverage bottle. The PET resin from which the bottle was made had an I.V. (intrinsic viscosity) of

6

0.85 dl/g in a 50/50 mixture of trifluoroacetic acid and dichloromethane at 30°C and a concentration of 0.4 g/dl. This piece of oriented PET film was constrained in a jig so that it could not shrink and was heat set at 220°C for 15 minutes. A square measuring exactly 0.5 inch by 0.5 inch was then cut from the heat set film after removing it from the jig.

The square of heat set film was then heated in a convection oven at 220°C for 15 minutes in an unconstrained manner. This square of heat set film was then remeasured and was found to have shrunk by 13%. This piece of film was again reheated to 220°C for 15 minutes in an unconstrained manner and remeasured. It was determined that the film did not shrink any further. Thus, this example shows that the process of this invention can be used to manufacture polyester articles which are dimensionally stable and which will not shrink at high service temperatures.

Example 2

This example was done as a control to determine the amount of shrinkage that would occur in a non-heat set film. In this example a square of PET film measuring 0.5 inch by 0.5 inch was cut from the bottle described in Example 1. It was then heated for 15 minutes at 220°C. A shrinkage of 57% was observed.

Example 3

In this experiment 1/2-liter PET bottles were blow molded utilizing a conventional molding technique. These bottles were then heat set in the mold they were formed in for 25 seconds and 213°C (415°F). In this heat treatment the bottles could not shrink because they were constrained by pneumatic pressure within the mold. These bottles were then heated to 160°C (320°F) for 30 to 35 minutes in a convection oven. During the unconstrained heating step the bottles shrunk by about 5% by volume. However, the bottles did not distort structurally.

These bottles which were made in accordance with the process of this invention were then heated to a temperature of 149°C (300°F) for a period of 2.5 hours. During this heating period the bottles did not shrink appreciable (less than 0.3% in volume) and did not distort. Thus, this example shows that polyester bottles which are dimensionally stable even at high service temperatures can be manufactured utilizing the process of this invention.

The process of this invention makes it possible to manufacture bottles and kegs which can be sterilized at high temperatures and refilled. Thus, reusable containers for foods and beverages can be made using the process of this invention. Containers made by this process also have improved gas barrier properties which is often an added benefit.

While certain representative embodiments and details have been shown for the purpose of illustrating the invention, it will be apparent to those skilled in this art that various changes and modifications may be made therein without departing from the scope of the invention.

WHAT IS CLAIMED IS:

1. An improved process for producing a dimensionally stable polyester article characterized by: (1) forming an over-sized article out of a polyester resin; (2) heat setting the over-sized article to an elevated heat setting temperature while holding the over-sized article under a mechanical constraint to prevent its shrinkage; and (3) heating the over-sized article in an unconstrained manner to a temperature which is greater than the expected service temperature of the article and no more than the heat setting temperature used to heat set the over-sized article while it was mechanically constrained, for a time sufficient to produce a dimensionally stable article of the desired size.

2. A process as specified in claim 1 characterized in that said polyester article is a hollow article and in that said over-sized article is about 1% to about 15% larger than the desired size of the article.

3. A process as specified in claim 1 characterized in that said polyester article is a film and in that said over-sized article is about 1% to 15% larger than the desired size of the article.

4. A process as specified in claim 2 characterized in that said hollow article is a container.

5. A process as specified in claim 4 characterized in that said container is a bottle.

6. A process as specified in claim 4 characterized in that said container is a can.

7. A process as specified in claim 5 characterized in that said polyester resin is selected from the group consisting of PET and blends of PET with PEI.

8. A process as specified in claim 6 characterized in that said polyester resin is selected from the group consisting of PET and blends of PET with PEI.

9. A process as specified in claim 7 characterized in that said over-sized article is 4% to 8% larger than the desired size of the article.

10. A process as specified in claim 8 characterized in that said over-sized article is 4% to 8% larger than the desired size of the article.